Europäisches Patentamt

European Patent Office

Office européen des brevets

(19)

(11) **EP 0 554 721 B1**

(12) **EUROPÄISCHE PATENTSCHRIFT**

(45) Veröffentlichungstag und Bekanntmachung des Hinweises auf die Patenterteilung:
**29.10.1997 Patentblatt 1997/44**

(51) Int Cl.⁶: **C08G 18/48**, C08G 18/66
// (C08G18/48, 101:00)

(21) Anmeldenummer: **93100877.5**

(22) Anmeldetag: **21.01.1993**

(54) **Verfahren zur Herstellung von elastischen, offenzelligen PUR-Weichschaumstoffen**

Process for preparing soft, elastic, open-celled PUR foams

Procédé de préparation de mousses souples, élastiques de PUR à cellules ouvertes

(84) Benannte Vertragsstaaten:
**AT BE CH DE DK ES FR GB IT LI NL PT SE**

(30) Priorität: **03.02.1992 DE 4202992**

(43) Veröffentlichungstag der Anmeldung:
**11.08.1993 Patentblatt 1993/32**

(73) Patentinhaber: **BAYER AG**
**51368 Leverkusen (DE)**

(72) Erfinder:
• **Meyer-Ahrens, Sven, Dr.**
 **W-5090 Leverkusen 1 (DE)**
• **Jacobs, Gundolf, Dr.**
 **Pittsburgh, PA 15243 (US)**
• **Hettel, Hans, Dr.**
 **W-5064 Rösrath-Forsbach (DE)**

(56) Entgegenhaltungen:
EP-A- 0 116 309 EP-A- 0 433 889
DE-A- 2 211 914 GB-A- 1 480 972

**Beschreibung**

PUR-Weichschaumstoffe werden bekanntlich als Polstermaterialien im Möbel- und Fahrzeugsektor vielseitig eingesetzt. Um die für den jeweiligen Anwendungsbereich notwendige Rohdichte/Stauchhärte-Relation einzustellen, fanden physikalische Treibmittel wie z.B. Monofluortrichlormethan R11) Verwendung, da sie im Gegensatz zu Wasser den Polyharnstoffgehalt des Polymers nicht erhöhen.

Viele der derzeit bekannten physikalischen Treibmittel weisen jedoch erhebliche Nachteile wie z.B. Ozonabbau-Potential, Treibhauswirksamkeit, Brennbarkeit oder Toxizität, auf.

Aufgabe der vorliegenden Erfindung ist es daher, die Stauchhärte von PUR-Heißschaumstoffen ohne Einsatz der bisher verwendeten physikalischen Treibmittel in der gewünschten Weise einzustellen.

Bekannt ist, daß die Stauchhärte eines PUR-Weichschaumstoffes durch Absenkung des Isocyanat-Index verringert werden kann.

Um bei Rohdichte 23 kg/m^3, einem sehr gängigen Schaumstofftyp entsprechend, eine Stauchhärte von 2,0 kPa zu erzielen, ist es z.B. notwendig, den Isocyanat-Index von 107 auf 92 abzusenken. Wie die Beispiele A und C zeigen, führt die Indexabsenkung aber zu einem nicht akzeptablen Verlust der mechanischen Eigenschaften.

Eine andere bekannte Möglichkeit zur Stauchhärterreduzierung besteht in der anteiligen Mitverwendung von Polyethern mit einem hohen Gehalt an Oxyethyleneinheiten. Polyethylenglykole besitzen aber häufig hohe Schmelzpunkte und sind daher nur schlecht zu verarbeiten oder führen in den zur Härterreduzierung notwendigen Mengen zu Störungen des Schäumvorgangs (Neigung zur Geschlossenzelligkeit bei linearen Typen, Schauminstabilitäten bei höherfunktionellen Ethern des genannten Typs).

In der GB-A 1 480 972 wird ein Verfahren zur Herstellung eines flexiblen geschlossenzelligen sogenannten Kaltschaumstoffes beschrieben, bei dem Polyisocyanat mit einer Polyolkomponente A mit einem EO-Gehalt von 15 % und einem mittleren Molekulargewicht im Bereich von 1000 bis 3000 und einer weiteren Polyolkomponente B mit einem EO-Gehalt von 75 % und einem Molekulargewicht im Bereich von 1000 bis 5000 in Gegenwart eines Katalysators und eines Treibmittels umgesetzt wird. Die Hauptpolyolkomponente A weist überwiegend primäre OH-Gruppen auf. Die Rückprallelastizität des erhaltenen Schaumstoffes liegt bei über 54 %.

In der EP-A-433 889 wird ein Verfahren zur Herstellung von PUR-Kaltschaumstoffen mit geringer Stauchhärte unter Einsatz eines speziellen Blockpolyoxypropylen-Polyoxyethylen-Polyolgemisches beschrieben. Aufgrund seines Blockpolymeraufbaus (überwiegend primäre OH-Gruppen) eignet sich dieses Polyolgemisch nicht zur Herstellung von Heißschaumstoffen.

Überraschenderweise wurde nun gefunden, daß sich offenzellige PUR-Heißschaumstoffe mit verringerter Härte und guter Elastizität herstellen lassen, wenn man geringe Mengen Oxyethylengruppen-recher Polyether (Oxyethylengruppengehalt >50 %, Funktionalität mindestens zwei) mitverwendet und gleichzeitig im Kennzahlbereich (Indexbereich) zwischen 95 und 110 arbeitet.

Das Verfahren ermöglicht es so, die Stauchhärte bei exzellentem Werteniveau, insbesondere bei hoher Schaumstoffelastizität, um mehr als 40 % zu reduzieren.

Überraschend ist im Vergleich zu den Beispielen A und B mit normalem Isocyanat-Index, daß die Elastizität durch die Verwendung des erfindungsgemäßen speziellen Polyethergemischs sogar noch angehoben wird (Beispiele B und E). Als Stand der Technik gilt nämlich, daß hohe Wassermengen und niedrige Indices Schaumstoffe unelastisch, d. h. ,,müde" machen.

Gegenstand der Erfindung ist ein Verfahren zur Herstellung von elastischen, offenzelligen PUR-Heißschaumstoffen mit einer Rückprallelastizität zwischen 44 und 46 % durch Umsetzung von

a) Polyisocyanaten mit

b) mindestens zwei gegenüber Isocyanaten aktive Wasserstoffatome aufweisenden Polyethern vom Molekulargewicht 400 bis 10.000 in Gegenwart von

c) Wasser und gegebenenfalls organischen Treibmitteln und in Gegenwart von

d) Katalysatoren sowie

e) an sich bekannten oberflächenaktiven Zusatzstoffen und gegebenenfalls weiteren an sich bekannten Hilfsmittel,

dadurch gekennzeichnet, daß als Komponente b) eine Mischung enthaltend

1. 0,5 bis 20 Gew.-% eines mindestens zwei Hydroxylgruppen aufiveisenden Polyethers mit überwiegend primären OH-Gruppen und mit einem Oxyethylengruppen-Gehalt >50 Gew.-% (bezogen auf Gesamtalkylenoxid), einem mittleren Molekulargewicht von 400 bis 10.000, vorzugsweise 5 bis 10 Gew.-% eines Triols vom mittleren Molekulargewicht von 3.000 bis 5.000 und mit einem Gehalt an Oxyethylengruppen größer als 70 Gew.-% (bezogen auf Gesamtalkylenoxid) und

2. 99,5 bis 80 Gew.-% eines Alkylenoxid-Additionsproduktes an Glycerin und gegebenenfalls zusätzlich Ethylenglykol vom mittleren Molekulargewicht von 400 bis 10.000, bevorzugt 3.000 bis 5.000, mit überwiegend sekundären OH-Gruppen und mit einem Gehalt von maximal 20 Gew.-% (bezogen auf Gesamtalkylenoxid) Oxyethylengruppen, bevorzugt mit einem Oxyethylengruppen-Gehalt von bis zu 13 Gew.-% verwendet wird,

wobei die Umsetzung in einem Kennzahlbereich von 95 bis 110, bevorzugt 98 bis 100 durchgeführt wird.
Zur Herstellung der erfindungsgemäßen Schaumstoffe werden eingesetzt:

a) Aliphatische, cycloaliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

$$Q(NCO)_n$$

in der n = 2 bis 4, vorzugsweise 2 bis 3, und Q = einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten, z.B. solche Polyisocyanate, wie sie in der DE-OS 28 32 253, Seiten 10 bis 11, beschrieben werden. Besonders bevorzugt werden aromatische Polyisocyanate, besonders die technisch leicht zugänglichen aromatischen Polyisocyanate, z.B. das 2,4- und 2,6-Toluylendiisocyanat, sowie beliebige Gemische dieser Isomeren (,,TDI"); Polyphenylpolymethylenpolyisocyanate, wie sie durch Anilin-Formaldehyd-Kondensation oder anschließende Phosgenierung hergestellt werden (,,rohes MDI") und Carbodiimidgruppen, Urethangruppen, Allophanatgruppen, Isocyanuratgruppen, Harnstoffgruppen oder Biuretgruppen aufweisenden Polyisocyanate (,,modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten,

b) eine Mischung, enthaltend

1. 0,5 bis 20 Gew.-% eines mindestens zwei Hydroxylgruppen aufweisenden Polyethers mit einem Oxyethylengruppengehalt >50 Gew.-% (bezogen auf Gesamtalkylenoxid), und einem mittleren Molekulargewicht von 400 bis 10.000. Dieses Polyetherpolyol weist überwiegend primäre OH-Gruppen auf. Vorzugsweise werden 5 bis 10 Gew.-% eines Triols mit einem mittleren Molekulargewicht von 3.000 bis 5.000 und einem Gehalt an Oxyethylengruppen größer als 70 Gew.-%, (bezogen auf Gesamtalkylenoxid) verwendet.

2. 99,5 bis 80 Gew.-% eines Alkylenoxid-Additionsproduktes an Glycerin oder einer Mischung aus Glycerin und Ethylenglykol mit einem mittleren Molekulargewicht von 400 bis 10.000, bevorzugt 3.000 bis 5.000, und einem Gehalt von maximal 20 Gew.-% (bezogen auf Gesamtalkylenoxid) Oxyethylengruppen, bevorzugt mit einem Oxyethylengruppen-Gehalt von bis zu 13 Gew.-% (bezogen auf Gesamtalkylenoxid). Dieses Additionsprodukt weist überwiegend sekundäre OH-Gruppen auf.

c) Wasser und gegebenenfalls organische Treibmittel. Vorzugsweise wird Wasser in einer Menge von 2 bis 15 Gew.-%, bezogen auf Komponente b), eingesetzt.

d) Katalysatoren der an sich bekannten Art in Mengen bis zu 10 Gew.-%, bezogen auf die Mengen an Komponente b).

Es werden ferner mitverwendet:
Oberflächenaktive Zusatzstoffe, wie Emulgatoren und Schaumstabilisatoren, ferner gegebenenfalls Hilfsstoffe wie Zellregler der an sich bekannten Art wie Paraffine oder Fettalkohole oder Dimethylpolysiloxane sowie Pigmente oder Farbstoffe, Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.
Diese gegebenenfalls mitzuverwendenden Hilfsstoffe werden beispielsweise in der DE-OS 27 32 292, Seiten 21 bis 24, beschrieben.

Weitere Beispiele von erfindungsgemäß mitzuverwendenden oberflächenaktiven Zusatzstoffen und gegebenenfalls mitzuverwendenden Schaumstabilisatoren sowie Zellreglern, Reaktionsverzögerern, Stabilisatoren, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens

Die Reaktionskomponenten werden erfindungsgemäß nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 27 64 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die Umsetzung aller Komponenten erfolgt erfindungsgemäß bei einer Kennzahl (Isocyanat-Index) von 95 bis 110, vorzugsweise bei einer Kennzahl von 98 bis 100.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter- oder Übervernetzung näher zu definieren. Die Kennzahl errechnet sich nach der allgemeinen Formel wie folgt:

$$\text{Kennzahl} = \frac{\text{Isocyanatmenge (praktisch)}}{\text{Isocyanatmenge (theoretisch)}} \times 100$$

Die erfindungsgemäß erhältlichen Polyurethan-Heißschaumstoffe finden z.B. Anwendung als Liege- und Sitzmöbel, Sitze in Verkehrsmitteln, vorzugsweise im Auto.

Alle nachfolgend angeführten Komponenten wurden intensiv miteinander vermischt und in an sich bekannter Weise zum Aufschäumen gebracht.

| Beispiele | | A (Vergl.) | B | C (Vergl.) |
|---|---|---|---|---|
| Polyol A | | 100 | 90 | 100 |
| Polyol B | | | 10 | |
| Wasser | | 4,5 | 4,5 | 4,5 |
| Schaumstabilisator OS 20 (Bayer AG) | | 1,0 | 1,5 | 1,0 |
| Dimethyl-ethanolamin | | 0,3 | 0,3 | 0,3 |
| Zinn(II)-octoat | | 0,2 | 0,2 | 0,35 |
| TDI*) | | 54,2 | 54,1 | 46,4 |
| Isocyanat-Index | | 107 | 107 | 92 |
| Rohdichte | / kgm$^{-3}$ | 23 | 23 | 23 |
| Zugfestigkeit | /kPa | 124 | 102 | 25 |
| Bruchdehnung | /% | 214 | 165 | 54 |
| Stauchhärte (40 %) | /kPa | 3,5 | 3,4 | 2,0 |
| DVR (90%) | /% | 6,2 | 4,9 | klebt |
| Kugelrückprallelastizität | /% | 42 | 44 | 39 |

*) Isomerengemisch aus 2,4- und 2,6-Toluylendiisocyanat im Gew.-Verhältnis 80:20 %

| Beispiele | D (Vergl.) | E | F |
|---|---|---|---|
| Polyol A | 100 | 90 | 90 |
| Polyol B | | 10 | 10 |

# EP 0 554 721 B1

(fortgesetzt)

| Beispiele | | D (Vergl.) | E | F |
|---|---|---|---|---|
| Wasser | | 4,5 | 4,5 | 4,5 |
| Schaumstabilisator OS 20 | | 1,0 | 1,5 | 1,5 |
| Dimethyl-ethanolamin | | 0,3 | 0,3 | 0,3 |
| Zinn(II)-octoat | | 0,28 | 0,24 | 0,22 |
| TDI*) | | 47,9 | 47,8 | 49,4 |
| Isocyanat-Index | | 95 | 95 | 98 |
| Rohdichte | / kgm^-3 | 23 | 23 | 23 |
| Zugfestigkeit | /kPa | 79 | 94 | 118 |
| Bruchdehnung | /% | 189 | 249 | 282 |
| Stauchhärte (40 %) | /kPa | 2,7 | 2,0 | 2,6 |
| DVR (90%) | /% | 5,5 | 4,3 | 4,2 |
| Kugelrückprallelastizität | /% | 40 | 46 | 44 |

Polyol A: PO/EO-Addukt an eine Mischung aus Glycerin und Ethylenglykol mit einem Oxyethylengehalt von ca. 10 Gew.-%, überwiegend sekundären OH-Endgruppen und einem mittleren Molekulargewicht von ca. 3.500.
Polyol B: PO/EO-Addukt an Glycerin mit einem Gehalt an Oxyethylengruppen von ca. 72 Gew.-%, überwiegend primären OH-Gruppen und einem mittleren Molekulargewicht von ca. 4.700.

## Patentansprüche

1. Verfahren zur Herstellung von elastischen, offenzelligen PUR-Heißschaumstoffen mit einer Rückprallelastisität zwischen 44 und 46 % durch Umsetzung von

    a) Polyisocyanaten mit

    b) mindestens zwei gegenüber Isocyanaten aktive Wasserstoffatome aufweisenden Polyethern vom Molekulargewicht 400 bis 10 000 in Gegenwart von

    c) Wasser und gegebenenfalls organischen Treibmitteln und in Gegenwart von

    d) Katalysatoren sowie

    e) an sich bekannten oberflächenaktiven Zusatzstoffen und gegebenenfalls weiteren an sich bekannten Hilfsmittel,

    dadurch gekennzeichnet, daß als Komponente b) eine Mischung enthaltend

    1. 0,5 bis 20 Gew.-% eines mindestens zwei Hydroxylgruppen aufweisenden Polyethers mit überwiegend primären OH-Gruppen und mit einem Oxyethylengruppen-Gehalt >50Gew.-% (bezogen auf Gesamtalkylenoxid) und mit einem mittleren Molekulargewicht von 400 bis 10 000, und

    2. 99.5 bis 80 Gew.-% eines Alkylenoxid-Additionsproduktes an Glycerin und gegebenenfalls zusätzlich Ethylenglykol vom mittleren Molekulargewicht 400 bis 10.000, vorzugsweise 3.000 bis 5.000, mit überwiegend sekundären OH-Gruppen und mit einem Gehalt von maximal 20 Gew.-% (bezogen auf Gesamtalkylkenoxid) an Oxyethylengruppen

    wobei die Umsetzung in einem Kennzahlbereich von 95 bis 110, bevorzugt 98 bis 100, durchgeführt wird.

**Claims**

1. Process for the preparation of resilient open-celled PUR hot foams structure which have an impact resilience of between 44 and 46%, by reacting

   a) polyisocyanates with

   b) polyethers of a molecular weight of from 400 to 10,000 which contain at least two hydrogen atoms capable of reacting with isocyanates, in the presence of

   c) water and optionally organic blowing agents and in the presence of

   d) catalysts and

   e) surface-active additives which are known per se and optionally additional auxiliary substances which are known per se,

   characterised in that as component b) a mixture comprising

   1. from 0.5 to 20 wt.% of a polyether which contains at least two hydroxyl groups, has predominantly primary OH groups and has an oxyethylene group content greater than 50 wt.% (in relation to the total alkylene oxide) and has an average molecular weight of from 400 to 10,000 and

   2. from 99.5 to 80 wt.% of a compound which is produced by the addition of alkylene oxide to glycerol and optionally additionally ethylene glycol, has an average molecular weight of from 400 to 10,000, preferably from 3,000 to 5,000, has predominantly secondary OH groups and has a maximum oxyethylene group content of 20 wt.% (in relation to the total alkylene oxide) is used,

   wherein the reaction is carried out within the index range 95 to 110, preferably 98 to 100.

**Revendications**

1. Procédé de préparation de mousses de polyuréthanne à chaud, élastiques et à cellules ouvertes, ayant une élasticité au rebond de 44 à 46 %, par réaction de

   a) des polyisocyanates avec
   b) des polyéthers de poids moléculaire 400 à 10000 contenant au moins 2 atomes d'hydrogène actif à l'égard des isocyanates, en présence de
   c) de l'eau et le cas échant des agents porogènes organiques, et en présence de
   d) des catalyseurs et
   e) des additifs tensioactifs connus en soi et le cas échéant d'autres produits auxiliaires connus en soi,

   caractérisé en ce que l'on utilise en tant que composant b) un mélange contenant

   1. 0,5 à 20 % en poids d'un polyéther à au moins deux groupes hydroxy, à groupes OH principalement primaires et à une teneur en groupes oxyéthylène supérieure à 50 % en poids (par rapport aux oxydes d'alkylène totaux), et à un poids moléculaire moyen de 400 à 10 000, et
   2. 99,5 à 80 % en poids d'un produit d'addition d'oxydes d'alkylène sur glycérol et le cas échéant éthylèneglycol, à un poids moléculaire moyen de 400 à 10000, de préférence de 3000 à 5000, à groupes OH principalement secondaires et à une teneur de 20 % en poids au maximum (par rapport aux oxydes d'alkylène totaux) en groupes oxyéthylène, la réaction étant effectuée à un indice qui se situe dans l'intervalle de 95 à 110, de préférence de 98 à 100.